# EUROPEAN PATENT APPLICATION

(11) **EP 4 509 567 A1**
(43) Date of publication of application: **19.02.2025**
(21) Application number: 23788414.3
(22) Date of filing: 14.04.2023
(51) Int. Cl.: C08L 101/00, B29C 55/28, B32B 27/00, C08K 3/16, C08K 3/20, C08L 1/00

(54) **RESIN MOLDED ARTICLE**

(30) Priority: 14.04.2022 JP 2022066968
(71) Applicant: Toppan Holdings Inc., Tokyo 110-0016 (JP)
(72) Inventor: TACHIKI, Sadafumi, Tokyo 110-0016 (JP); SAKAKIBARA, Ryusuke, Tokyo 110-0016 (JP); SHINDO, Takako, Tokyo 110-0016 (JP)
(74) Representative: TBK
(86) International application number: PCT/JP2023/015120
(87) International publication number: WO 2023/199997

(57) **Abstract**

The resin molded article comprises a resin derived from a used paper diaper. The resin molded article comprises a pulp component, and the content of the pulp component may be 0.1 parts by mass or more relative to the mass of the resin, which is taken as 100 parts by mass.

## Description

### [Technical Field]

The present invention relates to a resin molded article.

The present application claims priority to Japanese Patent Application No. 2022-066968 filed April 14, 2022, the entire contents of which are incorporated herein by reference.

### [Background Art]

There is a movement to recover and reuse the constituent materials of paper diapers from used paper diapers.

For example, PTL 1 has proposed a method of regenerating materials used in used paper diapers, characterized in that a water absorbing polymer contained in a paper diaper is decomposed into monomers, and then a pulp component contained in the paper diaper is separated and collected.

### [Citation List]

### [Patent Literature]

PTL 1: JP 3378204 B

### [Summary of the Invention]

### [Technical Problem]

However, the method used in PTL 1 is a technology that reuses the pulp component and other components separately, and further efficiency is required for material reuse.

Accordingly, an object of the present invention is to provide a resin molded article that can use materials of used paper diapers more efficiently and effectively.

### [Solution to Problem]

The present invention has the following aspects.
[1] A resin molded article comprises a resin derived from a used paper diaper.
[2] In [1] above, the resin molded article comprises a pulp component, and the content of the pulp component may be 0.1 parts by mass or more relative to the mass of the resin, which is taken as 100 parts by mass.
[3] In [1] or [2] above, the resin molded article comprises a water absorbent material, and the content of the water absorbent material may be 0.1 parts by mass or more relative to the mass of the resin, which is taken as 100 parts by mass.
[4] In any one of [1] to [3] above, the resin molded article comprises a calcium compound, and the content of the calcium compound may be 0.1 parts by mass or more relative to the mass of the resin, which is taken as 100 parts by mass.
[5] In any one of [1] to [4] above, the resin molded article comprises a coloring material, and the content of the coloring material may be 0.1 to 70 parts by mass relative to the mass of the resin, which is taken as 100 parts by mass.
[6] In any one of [1] to [5] above, the resin molded article may be an inflation film.
[7] In any one of [1] to [5] above, the resin molded article may be an injection molded article.
[8] In any one of [1] to [7] above, the resin molded article may have a decorative layer on its surface.

### [Advantageous Effects of the Invention]

According to the resin molded article of the above aspect, materials of used paper diapers can be used effectively.

### [Brief Description of the Drawing]

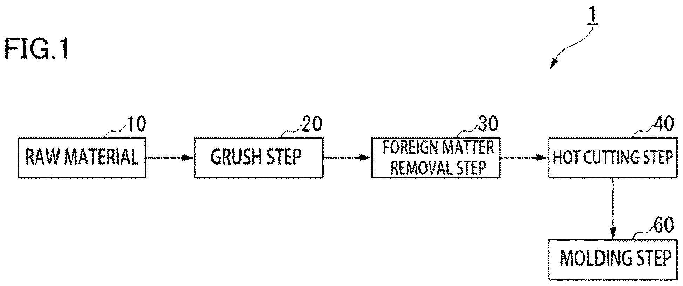

[Fig. 1] Fig. 1 is a block diagram showing the flow of a method for producing a resin molded article according to an embodiment of the present invention.

### [Description of the Embodiments]

### [Resin molded article]

In the present specification, the "resin molded article" comprises a resin as an essential component. As the resin, a resin that is generally used for paper diapers can be used, and examples include polyethylene, polypropylene, polystyrene, polyesters, and the like. Examples of polyesters include polyethylene terephthalate and the like. These resins may be used singly or in combination of two or more.

The resin molded article of the present disclosure comprises a resin derived from a used paper diaper. That is, in the present disclosure, part or all of the resin as an essential component is derived from a used paper diaper.

The content of the resin derived from a used paper diaper is, for example, preferably 10 mass% or more, more preferably 50 mass% or more, and even more preferably 70 mass% or more, relative to the total mass of the resin molded article. When the content of the resin derived from a used paper diaper is equal to or more than the above lower limit value, the material of the used paper diaper can be used more effectively. The upper limit value of the content of the resin derived from a used paper diaper is not particularly limited, but is, for example, 99 mass%.

The content of the resin in the resin molded article is determined, for example, by a nuclear magnetic resonance (NMR) method, and the content of the resin derived from a used paper diaper can be determined by subtracting the content of a resin added during the molding of the resin molded article from the content of the resin in the resin molded article.

In terms of further improving the quality of the resin molded article, the resin molded article may contain a resin other than the resin derived from a used paper diaper (hereinafter also referred to as the "additive resin"). Examples of the additive resin include general-purpose resins, such as polyethylene, polypropylene, polystyrene, and polyethylene terephthalate. Among these additive resins, in terms of easily improving the quality of the resin molded article, polyethylene and polypropylene are preferable, and polyethylene is more preferable. Examples of polyethylene include low-density polyethylene (LDPE), linear low-density polyethylene (LLDPE), medium-density polyethylene (MDPE), high-density polyethylene (HDPE), and the like. Examples of polypropylene include stretched polypropylene (OPP), unstretched polypropylene (CPP), and the like.

The content of the additive resin is, for example, preferably 70 mass% or less, more preferably 50 mass% or less, even more preferably 10 mass% or less, and may be 0 mass%, relative to the total mass of the resin molded article. When the content of the additive resin is equal to or less than the above upper limit value, the material of the used paper diaper can be used more effectively.

The content of the additive resin can be adjusted by the amount of resin added during the molding of the resin molded article, and can be suitably adjusted according to the physical properties required for the resin molded article.

The used paper diaper of the present embodiment may contain urine, feces, and other excretions, and also may include discarded paper diapers that have not been used.

When a used paper diaper is recycled, the used paper diaper is washed and then immersed in an aqueous solution containing a calcium compound to release water such as urine contained in a water absorbent material. After that, the paper diaper is disinfected and dried, and resin components are separated.

Therefore, the resin molded article of the present embodiment may contain a water absorbent material and a calcium compound, in addition to a pulp component contained in the paper diaper.

Examples of the pulp component include pulp, synthetic fibers, and the like used in the nonwoven fabric of the paper diaper.

The content of the pulp component is, for example, preferably 70 mass% or less, more preferably 50 mass% or less, and even more preferably 10 mass% or less, relative to the mass of the resin derived from the used paper diaper, which is taken as 100 parts by mass. When the content of the pulp component is equal to or less than the above upper limit value, the quality of the resin molded article can be ensured. The lower limit value of the content of the pulp component is not particularly limited; however, in terms of easily specifying that the resin molded article uses a paper diaper as a raw material, the lower limit value is, for example, 0.1 parts by mass relative to the mass of the resin derived from the used paper diaper, which is taken as 100 parts by mass.

The content of the pulp component can be determined, for example, by constituent sugar analysis.

Examples of the water absorbent material include super absorbent polymers (SAP) and the like.

Examples of super absorbent polymers include sodium polyacrylate, carboxymethylcellulose, polyvinyl alcohol, and the like. Since these super absorbent polymers are widely used, sodium polyacrylate is preferred.

The content of the water absorbent material is, for example, preferably 70 parts by mass or less, more preferably 50 parts by mass or less, and even more preferably 10 parts by mass or less, relative to the mass of the resin derived from the used paper diaper, which is taken as 100 parts by mass. When the content of the water absorbent material is equal to or less than the above upper limit value, the quality of the resin molded article can be ensured. The lower limit value of the content of the water absorbent material is not particularly limited; however, in terms of easily specifying that the resin molded article uses a paper diaper as a raw material, the lower limit value is, for example, 0.1 parts by mass relative to the mass of the resin derived from the used paper diaper, which is taken as 100 parts by mass.

The content of the water absorbent material can be determined, for example, by an NMR method or a time-of-flight secondary ion mass spectrometry (TOF-SIMS) method.

In the present specification, the water absorbent material is not included in the "resin derived from a used paper diaper" and the "additive resin" mentioned above.

Examples of the calcium compound include calcium chloride, calcium oxide (quicklime), calcium hydroxide (slaked lime), and the like. Since calcium compounds are widely used as dehydrating materials, the calcium compound is preferably calcium chloride.

The content of the calcium compound is, for example, preferably 70 parts by mass or less, more preferably 50 parts by mass or less, and even more preferably 10 parts by mass or less, relative to the mass of the resin derived from the used paper diaper, which is taken as 100 parts by mass. When the content of the calcium compound is equal to or less than the above upper limit value, the quality of the resin molded article can be ensured. The lower limit value of the content of the calcium compound is not particularly limited; however, in terms of easily specifying that the resin molded article uses a used paper diaper as a raw material, the lower limit value is, for example, 0.1 parts by mass relative to the mass of the resin derived from the used paper diaper, which is taken as 100 parts by mass.

The content of the calcium compound can be determined, for example, by the X-ray diffraction (XRD) method or X-ray photoelectron spectroscopy (XPS).

In terms of achieving a good appearance, the resin molded article may contain a coloring material, such as pigment or dye.

The content of the coloring material is, for example, preferably 0.1 to 70 parts by mass, more preferably 1 to 50 parts by mass, and even more preferably 5 to 30 parts by mass, relative to the mass of the resin derived from the used paper diaper, which is taken as 100 parts by mass. When the content of the coloring material is equal to or more than the above lower limit value, the resin molded article can have a better appearance. When the content of the coloring material is equal to or less than the above upper limit value, the physical properties of the resin molded article can be further enhanced.

The content of the coloring material can be determined, for example, by the NMR method or the TOF-SIMS method.

In terms of achieving a good appearance, the resin molded article may have a decorative layer on its surface.

The decorative layer is, for example, a printed layer with printing on its surface, a decorative layer with decoration on its surface, or the like.

The form of the resin molded article is not particularly limited, and examples include inflation molded inflation films, pelletized pellets, injection molded injection parts (injection molded articles), sheet molded articles formed in sheet form, and the like.

The resin molded article can be used for various applications, and examples of the applications include packaging bags made of inflation films, injection molded playground blocks, flower bed fences, roofing materials, extruded building sheets, agricultural cover sheets, and the like.

### [Method for producing resin molded article]

The resin molded article of the present disclosure can be produced in the same manner as for conventionally known resin molded articles, except that a used paper diaper is used as a raw material.

The method for producing a resin molded article of the present embodiment will be described in detail below with reference to the drawing.

As shown in Fig. 1, the method 1 for producing a resin molded article of the present embodiment comprises a grush step 20, a foreign matter removal step 30, a hot cutting step 40, a crushing step 50, and a molding step 60.

Examples of the raw material 10 include resin components etc. separated from a used paper diaper.

The paper diaper of the present embodiment is composed of, for example, a surface material, a three-dimensional leakage-preventing gather, a water absorbent material, and a waterproof material. Examples of the surface material include non-woven fabrics made of polyethylene or polypropylene. Examples of the three-dimensional leakage-preventing gather include composites of non-woven fabrics and elastic materials.
Examples of the water absorbent material include absorbent paper, pulp, polymer absorbent composites, and the like. Examples of the waterproof material include non-woven fabrics made of synthetic fibers that cover the outer surface of the paper diaper. In addition, the paper diaper may have adhesive tape, adhesive material, and other members for fastening the paper diaper.

When a used paper diaper is recycled, the used paper diaper is washed and then immersed in an aqueous solution containing a calcium compound to release water such as urine contained in a water absorbent material. After that, the paper diaper is disinfected and dried, and the resin components are separated to obtain a raw material 10.

The grush step 20 is a step of reducing (compressing) the volume of the raw material 10 by rotating the raw material 10 and utilizing the friction heat and shear heat generated during rotation.

Since the method for producing a resin molded article of the present embodiment has the grush step 20, a reduced volume product (grush) with a reduced resin content can be obtained. Since the resin component in the grush is not melted, there is little degradation, and mixing and blending can be performed efficiently. Accordingly, a large amount of grush can be treated in the subsequent foreign matter removal step 30.

In the grush step 20, equipment such as a hopper that rotates the raw material 10 while shearing it can be used.

The foreign matter removal step 30 is a step of heating and melting the grush, and removing foreign matter.

The hot cutting step 40 is a step of extruding and cutting the molten material from which foreign matter has been removed.

The cut molten material is cooled to obtain a solidified product (hot-cut product) of the desired size.

An additive resin, a coloring material, and the like are added to the solidified product obtained in the hot cutting step 40, followed by kneading and cooling, thereby obtaining a resin molded article (molding step 60).

In the molding step 60, for example, depending on the desired quality of the resin molded article, various additives may be added in addition to the additive resin and coloring material. By adding various additives, the functions of the additives can be imparted to the resin molded article.

Examples of various additives include antioxidants, UV absorbers, antibacterials, deodorants, softeners, biodegradables, and the like.

The amount of various additives added is, for example, preferably 0.1 to 70 parts by mass, more preferably 1 to 50 parts by mass, and even more preferably 5 to 30 parts by mass, relative to 100 parts by mass of the hot-cut product.

When the amount of various additives added is equal to or more than the above lower limit value, the functions of the additives can be imparted to the resin molded article. If the amount of various additives added is equal to or less than the above upper limit value, the strength of the resin molded article can be ensured.

When the resin molded article has a decorative layer, the method for providing the decorative layer is not particularly limited, and examples include a method in which after applying an adhesive etc. to the surface of the molded product, a decorative layer is laminated, and the adhesive is cured to provide the decorative layer, and a method in which a decorative layer is provided by integrally molding the decorative layer and the molded product by extrusion molding or the like.

The resin molded article of the present disclosure has been described in detail with reference to the drawing. The present invention should not be construed as limited to this embodiment, which can be altered and combined within a range not departing from the spirit of the present disclosure.

For example, some of the resin components of the used paper diaper may be used as raw materials, or all of them may be used as raw materials.

For example, in the hot cutting step 40, after adding various additives, the molten material may be cut and pelletized.

For example, by imparting biodegradability to the resin molded article, the step of disposing of the resin molded article can be omitted, which can reduce the burden on the global environment.

Since the resin molded article of the present disclosure uses resin components of used paper diapers as raw materials, materials of used paper diapers, which have been disposed of in the past, can be used more efficiently and effectively. This can reduce the amount of used paper diapers to be disposed of, and thus can reduce the burden on the global environment.

With the resin molded article of the present disclosure, even if the materials of paper diapers are not 100% separated for each material, they can be distributed in the market as new products. Therefore, the precision in the separation step, for which separation with precision has conventionally been required, can be reduced, and resin molded articles can be produced more easily.

The resin molded article of the present disclosure can be used as a raw material for further reuse. This can reduce the waste of resources due to disposal etc., and thus can reduce the burden on the global environment.

### [Industrial Applicability]

According to the resin molded article of the above embodiment, materials of used paper diapers can be used effectively.

### [Reference Signs List]

1 Method for producing resin molded article
10 Raw material
20 Grush step
30 Foreign matter removal step
40 Hot cutting step
60 Molding step

## Claims

1. A resin molded article comprising a resin derived from a used paper diaper.

2. The resin molded article according to claim 1, comprising a pulp component, wherein the content of the pulp component is 0.1 parts by mass or more relative to the mass of the resin, which is taken as 100 parts by mass.

3. The resin molded article according to claim 1 or 2, comprising a water absorbent material, wherein the content of the water absorbent material is 0.1 parts by mass or more relative to the mass of the resin, which is taken as 100 parts by mass.

4. The resin molded article according to claim 1 or 2, comprising a calcium compound, wherein the content of the calcium compound is 0.1 parts by mass or more relative to the mass of the resin, which is taken as 100 parts by mass.

5. The resin molded article according to claim 1 or 2, comprising a coloring material, wherein the content of the coloring material is 0.1 to 70 parts by mass relative to the mass of the resin, which is taken as 100 parts by mass.

6. The resin molded article according to claim 1 or 2, which is an inflation film.

7. The resin molded article according to claim 1 or 2, which is an injection molded article.

8. The resin molded article according to claim 1 or 2, which has a decorative layer on its surface.
